# EUROPEAN PATENT APPLICATION

(11) **EP 1 819 130 A1**
(43) Date of publication of application: **15.08.2007**
(21) Application number: 06002911.3
(22) Date of filing: 14.02.2006
(51) Int. Cl.: H04L 29/08, H04L 12/58, H04L 12/18

(54) **Method and system for evaluating data in a data network**

(71) Applicant: Lycos Europe GmbH, 33311 Gütersloh (DE)
(72) Inventor: Radgaard, Torben, Yervan (AM)
(74) Representative: Von Renesse, Dorothea

(57) **Abstract**

Method for evaluating data in a data network, said network comprising an evaluation unit and at least two users each having an input unit, whereas the network enables a communication between the at least two users, whereas the communication data input by the users is evaluated by the evaluation unit, thereby generating a profile for one, several or all of the users.

## Description

The invention relates to a method and a system for evaluating data in a data network.

A data network, in particular a communication network provides the possibility of exchanging data (communication data) between a large number of users. The internet is an example for a network that allows the users to communicate worldwide and exchange data. One possibility of real-time communication in the internet is given in chat-rooms. Usually, chats or chat groups in chat-rooms are classified into different categories and topics, so that users with corresponding interests may find each other more easily. However, due to the dramatically increasing numbers of users in such chat-rooms, it becomes more and more difficult to identify users that really do share the same interests and to recognize the information sought for.

Another problem of chat rooms is the risk of misconduct of some user. In the anonymity of chat-rooms, in which the users - whose identity is protected by the provider of the chat-room for reasons of data protection - usually are logged in under their nicknames, some people intend to show an unacceptable behaviour, for example by using abusive or insulting language. These cases of misconduct need to be sanctified.

Accordingly the invention aims at providing a method and a system which assists in qualifying the users of a data network, in particular the users of chat rooms. In particular, therewith it aims at assisting to protect.

This objective is solved by a method and a system according to the independent claims. Advantageous embodiments are subject of the respective dependent claims.

According to the invention a method for evaluating data in a data network is provided, said network comprising an evaluation unit and at least two users each having an input unit for entering data, such as communication data, into the network, said network enabling the communication between the users. The evaluation unit analyses and evaluates the (communication) input data of the users and generates a profile for one, several or all of the users involved, based on the evaluated data. Accordingly, the evaluation unit automatically creates profiles of the users in the network by analysing their action within the network.

It is an important advantage of the invention, that the profiling of the user is based on the evaluated data, and thus has a rather factual background. This allows an objective profiling on the basis of the user's performance in his communication. Accordingly, the term "profile" or "user profile" or "profile of the user" as used in the context of the present invention means any profile of the user of a data network generated by the evaluation of his or her communication data input.

Preferably the user profiles, created by the evaluation unit, are made available to the other users of the network. This allows the users to decide on the basis of the profiles whether they wish to communicate or exchange data with selected users only. The profile may be available to all users including the user the specific profile is assigned to (profiled user). In some cases it may be advantageous to exclude the profiled user from the participation in the chat room (chat group).

In a particularly advantageous embodiment, the profiles of the users are made available to an administrator of the evaluation unit. This administrator has the competence and/or capability to contact the profiled user. Preferably, the administrator is any person or entity who/which has technical control over the access of the profiled user to the data network. According to the individual user profile the administrator can take action - such as e.g. sending warning mails - against the user and either contact and/or suspend the user temporarily or permanently from the network system. These actions can be controlled automatically or be subject of individual decisions of the administrator. Therewith, the invention provides for an effective system of abuse management.

In another embodiment of the invention, the profiles of the users or parts of it may be published on the profile page of the chat community. Furthermore a top list of the best/worst profiled users may be published there.

The data being evaluated for creating the user profiles may be data that is input by the profiled users. Alternatively or additionally the data input of other users, which is directed at the profiled user may be considered.

In a preferred embodiment of the present invention the evaluated data is classified by the evaluation unit according to specific predefined categories. Those categories may be arbitrarily chosen. Preferably the categories are assigned to different attributes describing human characteristics and behaviour. For example attributes such as sweet, funny, friendly, sexy, social may be chosen. In a preferred embodiment of the invention the user profiles will not just be generated but also classified according to the different attributes as chosen for generating the users' profiles.

In an internet chat community, the data evaluated may be taken for example from public chat rooms and/or from a direct (private) chat between two or several users. Furthermore internal mails sent within the community, messages that are left in a public or private guest book or the information left in web logs by the users may be employed for evaluation.

Alternatively or additionally, if some of the users of the network have created a personal list of favourite network users and/or specific ratings for those users, these lists (references) may as well be taken into account for creating the user profiles. The lists of single users may quote other users who are considered to be friends and/or users they had positive or negative experiences with. The lists may be monitored by registering and counting; for example counting the number of users who request or reject requests of being entered onto such lists and the number of days users have been on such a favourite list. Furthermore the daily, weekly, monthly or yearly size of the lists may be considered.

The rating (scoring) of the users may be related to a user itself or to specific data being input by the user. The evaluation unit may provide a rating/scoring system to the users, based on different rating/scoring characteristics, such as sweet, funny sexy, awful, abusive, romantic, etc.

The input units used by the users for inputting the data may be of arbitrary kind. For example keyboards for written information or voice data entry devices for spoken words may be used.

In case the input data is not text data or the input text data is transferred into data other than text during transmission within the network, the evaluation network preferably reconverts the data being received into text data, as this allows an easy evaluation by means of (text) screening.

Apart from other types of screening data in a network, the screening may comprise the comparison of words (expressions and phrases) in the text data with specific expressions and phrases that are stored in a dictionary of the evaluation device. The stored expressions and phrases may be classified according to different categories and subcategories, which are preferably the same categories as used for creating the users' profiles.

Preferably, the evaluation unit stores an absolute score for each of the expressions and phrases stored in the dictionary. The scores may as well be weighted based onto the context of the input data and/or on personal attributes of the user inputting the data. This allows a flexible generation of the user profiles in that different words have different influence on the final (score of the) profile. For example the score of a word or expression may indicate the (un)popularity of the user using it. Furthermore the scoring may also depend on personal characteristics of the users, such as his/her gender, age, etc..

The screening of the data input may as well comprise means for modifying the data input of the user. These means do not only allow the completion, correction or substitution of incorrect or incomplete data input. They further preferably allow to modify data input according to the profile of the user. For example, the user enters into the input unit salutary addresses or farewells and the modifying means supplement those with expressions or symbols of cordiality, which are selected according to the users score in his profile.

The evaluation of the data being input by the different users may further be used for automatically providing the users with information, for example advertisements, that are matched with the personal needs and interests of the specific user.

The evaluation unit may as well provide the possibility to search the generated user profiles, allowing users to easily find other users compatible with their interests.

Furthermore the user profiles or the scores within the user profiles may be used to automatically provide special user functions within the network. For example users may be awarded with special functions within a chat community when they receive positive profile of a certain level.

A system which may be used for executing the inventive method comprises at least an input unit for each of the users involved and an evaluation unit. The communication of the users is evaluated and screened by the evaluation unit. The evaluation unit comprises means for evaluating the input data and further means for generating the user profiles. The evaluating means may further comprise screening means for conducting screening functions of the data being input.

Furthermore the device may comprise storing means for storing the users' scores. Additional storing means can be used for storing the profiles and/or the screening elements (screening rules) for use with the screening means.

Advantageously the system may as well comprise output means for making the created user profiles available to them.

Following, the invention will be further explained by means of exemplary embodiments as presented in the drawings.
- Fig. 1:: shows in a simplified flow chart a method according to the invention in a preferred embodiment and
- Fig.2:: shows a preferred embodiment of a system for executing the method according to the invention.

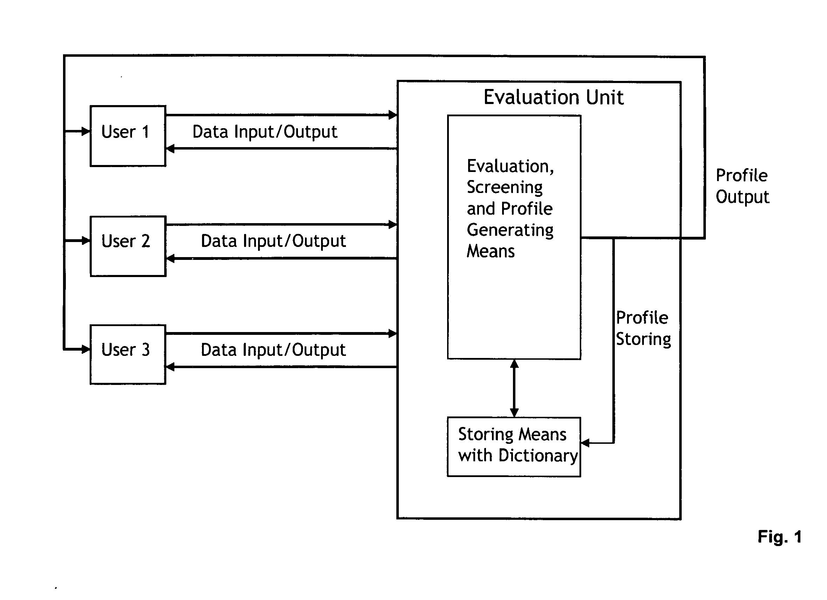

Fig. 1 shows the basic functionality of a method according to the invention. The network allows a communication of the users (1 to 3) with each other. The communication is transmitted via the evaluation unit, which evaluates the data input for generating user profiles, which will be made available to the users. The evaluation of the data input is done by screening the data, for example by looking for expressions or phrases matching those stored in a dictionary.

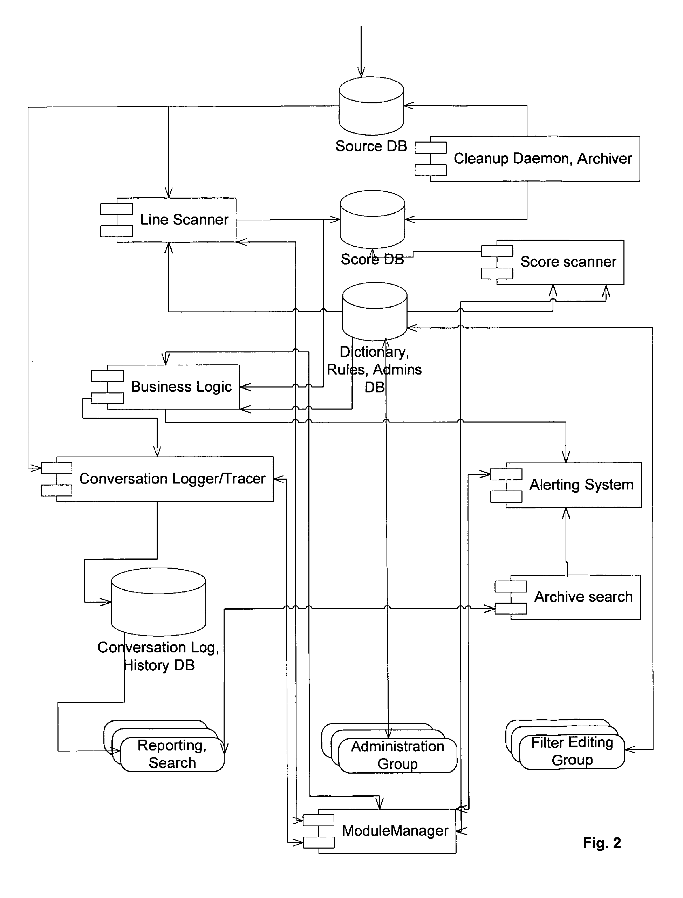

Fig. 2, illustrates more precisely the structure and functionality of the evaluation unit. The system basically consist of seven modules, which perform the inventive method of evaluating the data in the network, the line scanner, the score scanner, the business logic module, the conversation logger/tracer, the alerting system, the cleanup daemon/archiver and the archive search module.

The line scanner reads the data from the source data base, i.e. the data input by the users of the network. In case the read data is an ignore message, the appropriate information will be stored in the score database.

Additionally, the data, which in the present embodiment is text data, is checked against the expressions and phrases, which are predetermined by the administration and filter editing group and stored in the dictionary database. In case a pattern matches, i.e. an expression or phrase in the evaluated data matches an expression or phrase in the dictionary database, the appropriate score will be stored in the score database.

The score scanner reads the new information in the score database and checks the expressions and/or phrases against predefined scoring rules. Appropriate scoring points will be calculated.

The business logic module checks the information updated by the line as well as by the score scanner against predefined alerting rules, and, in case the information matches one of the rules, sends an alerting request to the alerting system as well as a conversation logging request to the conversation logger/tracer.

The conversation logger/tracer logs the specific conversation, i.e. the evaluated data exchange of the users involved, and traces it until the end. An end of the conversation is detected, if no more data is exchanged between the users for a time period of e.g. 20 minutes.

The alerting system sends an alerting email to the appropriate recipient, for example to one or several of the users involved or to the administration group.

Data stored in the source database, which is older than a predefined time period will be copied into the cleanup daemon/archiver module and deleted from the source database. All information that points to the deleted data of the source database will also be deleted from the score database.

The archive search module enables the searching of the previously evaluated data input.

## Claims

1. Method for evaluating data in a data network, said network comprising an evaluation unit and at least two users each having an input unit, whereas the network enables a communication between the at least two users, **characterized in that** the communication data input by the users is evaluated by the evaluation unit, thereby generating a profile for one, several or all of the users.

2. Method according to claim 1, **characterized in that** the user profile of a specific user is made available to one, several or all of the other users of the network or to the networks' administrator.

3. Method according to one of the preceding claims, **characterized in that** the data being input from a specific user and/or the input data from other users being directed to said specific user is evaluated for generating the user profile.

4. Method according to one of the preceding claims, **characterized in that** the evaluated input data of the user(s) is assigned to different predefined categories, creating a category-specific user profile.

5. Method according to claim 4, **characterized in that** the categories are classified according to attributes of human characteristic traits.

6. Method according to one of the preceding claims, **characterized in that** the input data evaluated is a direct chat between two or several users.

7. Method according to one of claims 1 to 5, **characterized in that** the input data evaluated is mails, messages and/or web logs sent or published in the network.

8. Method according to one of claims 1 to 5, **characterized in that** the input data evaluated is a list of favourites created by the user(s).

9. Method according to one of claims 1 to 5, **characterized in that** the input data evaluated is taken from a rating of a specific user created by one or several of the other users.

10. Method according to claim 9, **characterized in that** the rating of the specific user is created **in that** the other user(s) rate some or each of the specific users input data.

11. Method according to one of the preceding claims, **characterized in that** the communication data input is transferred into text data by the evaluation unit.

12. Method according to claim 11, **characterized in that** the text is screened by the evaluation unit

13. Method according to one of claims 11 or 12, **characterized in that** incomplete and/or incorrect expressions or phrases of the users' input are completed or corrected by the evaluation unit.

14. Method according to one of claims 11 to 13, **characterized in that** the evaluation unit compares the expressions or phrases screened from the users' data input with specific expressions and phrases of a dictionary stored in the evaluation unit.

15. Method according to claim 14, **characterized in that** the specific expressions and phrases in the dictionary are classified according to specific categories.

16. Method according to one of claims 14 or 15, **characterized in that** the evaluation unit stores an absolute score for each of the expressions and/or phrases in the dictionary.

17. Method according to claim 16, **characterized in that** the evaluation unit weights the scores based on the context of the input data and/or on personal attributes of the user inputting the data.

18. Method according to one of the preceding claims, **characterized in that** the evaluation of the user data input is used to automatically provide specific information, created by the evaluation unit, to one, several or all of the users.

19. System for the communication between two or more users of a data network, comprising an evaluation unit and at least an input unit for each of the users, **characterized in that** the evaluation unit comprises means for evaluating the input data of the users and for generating a profile for one, several or all of the users.

20. System according to claim 19, **characterized in that** the means for evaluating the input data comprises a text screening means.

21. System according to claim 19 or 20, **characterized in that** the evaluation unit comprises storing means for storing the users' profiles and/or the text screening elements for use with the text screening means.

22. System according to one of claims 19 to 21, **characterized by** output means for one, several or all of the users.

23. Use of the method according to one of the claims 1 to 18 or the system according to one of the claims 20 to 22 for an abuse management of a data network, in particular a chat group.

24. Use according to claim 23, wherein an administrator has means to control the access of a user to the network according to his/her profile.

25. Use according to claim 23, wherein the administrator executes automatic reactions wherein a user passes a predetermined score threshold.

26. Use according to claim 23 to 25, wherein a user is automatically excluded from the network upon reaching a predetermined score.
